Europäisches Patentamt

European Patent Office

Office européen des brevets

(19)

(11) Veröffentlichungsnummer: **0 074 012**
A2

(12) **EUROPÄISCHE PATENTANMELDUNG**

(21) Anmeldenummer: 82107740.1

(22) Anmeldetag: 24.08.82

(51) Int. Cl.³: **C 08 B 9/00**
C 08 L 1/24, D 01 D 1/10
D 01 F 2/08

(30) Priorität: 27.08.81 DE 3133920

(43) Veröffentlichungstag der Anmeldung:
16.03.83 Patentblatt 83/11

(84) Benannte Vertragsstaaten:
AT DE FR GB NL SE

(71) Anmelder: HOECHST AKTIENGESELLSCHAFT
Postfach 80 03 20
D-6230 Frankfurt/Main 80(DE)

(72) Erfinder: Mayer, Reinhart
Veilchenstrasse 25
D-8420 Kelheim(DE)

(54) Verfahren zur Verbesserung der Viskosefiltration.

(57) Das Verfahren besteht in einem Zusatz von 0,1 bis 0,001 Gew.-% oder weniger an hochmolekularen Alkali-polysaccharid-xanthogenaten zur Viskose vor der 1.Filtration. Durch einen solchen Zusatz ist es möglich, 1 bis 2 der sonst üblichen 3 bis 4 Filtrationsstufen einzusparen.

EP 0 074 012 A2

HOECHST AKTIENGESELLSCHAFT  HOE 81/F 217    Dr.FK/cr

Verfahren zur Verbesserung der Viskosefiltration

Die Erfindung betrifft die Verbesserung der Viskosefiltration durch Zusatz von hochmolekularen Xanthogenaten zur Viskose in Mengen von 0,1 bis 0,001 % und weniger.

Bei der Herstellung von Zellwolle und Reyon nach dem Viskoseverfahren ist es sehr schwierig, die Viskose, d.h. die Lösung des Cellulose-xanthogenats in Wasser oder verdünnter Natronlauge soweit durch Filtration zu reinigen, daß bei dem anschließenden Spinnprozeß keine Störungen mehr erwartet werden müssen. Der Filtrationsaufwand wird besonders problematisch, wenn durch den Einsatz von qualitativ schlechten Zellstoffen, durch Absenkung des Alkaliverhältnisses und/oder des Schwefelkohlenstoffgehaltes versucht wird, die Herstellungskosten zu reduzieren. Die Verunreinigungen in der Viskose können organischer und anorganischer Natur sein und z.B. aus ungelösten aber angequollenen Cellulosefaserbruchstücken oder aus Metallsulfiden oder ähnlichem bestehen.

Um die gewünschte Reinheit der Spinnviskose sicherzustellen, ist es notwendig, die Viskosen drei bis viermal durch mehrere Lagen von Textilmaterial zu filtrieren. Als Filterstoffe haben sich hochvoluminöse Filtertücher z.B. aus Filtercalmuck bewährt. Üblicherweise werden die verschiedenen Filtrationen der Viskose als Druckfiltration durchgeführt. Die Filterstoffbeläge sind zu wechseln, wenn bei gleichbleibender Förderleistung der Druck in den Pressen ein zulässiges Maß übersteigt, das apparativ bedingt ist zum andern aber auch dadurch, daß

- 2 -    0074012

bei einem erhöhten Druckgefälle in den Filterapparaten
die Gefahr besteht, daß schleimige, zunächst zurückgehaltene Verunreinigungen doch noch durch die Filterporen
der eingesetzten Filterstofflagen gepreßt werden.

Um den hohen manuellen Arbeitsaufwand, der beim Einsatz
von Filterpressen unvermeidlich ist, zu reduzieren,
werden seit einigen Jahren auch Automatikfilter für die
erste und zweite Filtration der Viskose eingesetzt. Als
Filtermittel dienen beispielsweise Aufschlämmungen von
Polyvinylchloridpulvern oder Sätze von Metallsieben bzw.
gesinterten Metallfritten. Bei derartigen Apparaten ist
eine Reinigung der Filtermaterialien durch Rückspülung
möglich. Auch bei Einsatz derartiger, weniger arbeitsintensiver Geräte war es nicht möglich, die Zahl der
hintereinander durchzuführenden Filtrationsstufen zu
reduzieren.

Bei der Klärung von Abwasser ist es bekannt, eine Verbesserung der Klärung durch Zusatz von Flockungsmitteln
bzw. Flockungshilfsmitteln zu erreichen. Das sind
beispielsweise anionenaktive, kationenaktive sowie
neutrale Hochpolymere, die die Wirkung der Braunschen
Molekularbewegung bremsen, abstoßende elektrische
Ladungen bei den Schmutzteilchen beseitigen können und
so zu einem Zusammenballen und einem Absetzen der
Schmutzteilchen führen können. Der Einsatz derartiger
Stoffe bei der Viskosefiltration erschien wenig erfolgversprechend, da ein Absetzen aufgrund der hohen
Viskosität derartiger Lösungen nicht zu erwarten war.
Versuche haben dann auch gezeigt, daß bei Einsatz von
handelsüblichen Flockungsmitteln kationisch wirkende hochmolekulare Stoffe in der Viskose keinerlei Verbesserung der
Filtrierbarkeit zeigen. Anionenaktive und neutrale
hochmolekulare Substanzen, wie z.B. Maisstärke, führen
zu einer Verbesserung der Qualität der Viskose nach der ersten Filtration, sofern unüblich hohe Mengen eingesetzt werden. Diese betragen 0,1 % Flockungsmittel bezogen auf den Zellstoffgehalt der Viskose und mehr. Werden diese Gewichtsprozentwerte unterschritten, so kann keine signifikante Verbesserung des Filtrationseffektes bzw. der Qualität der Viskose nach einer Filtration beobachtet werden.

Zur Charakterisierung des Filtrationseffektes bei Viskosen wurde die Filterverstopfungskonstante gewählt. Die Bestimmung dieser Konstante erfolgt nach Hermans und Bredée, Rec. Trav. Chim. Pays-Bas $\underline{54}$ (1935), 680 ff. Dabei wird die zu prüfende Viskose in ein zylindrisches Stahlgefäß eingeführt, wie es beispielsweise in "Götze, Chemiefasern nach dem Viskoseverfahren", dritte Auflage (1967), Band II, 1115, Figur 783 beschrieben ist und bei konstantem Druck von 2,0 atü durch 3 Lagen Baumwollbatist (Gewebeeinstellung: Kette 52 Fäden/cm, Schuß 49 Fäden/cm, $m^2$-Gewicht 84 $g/m^2$) filtriert. Die wirksame Filterfläche beträgt bei dieser Prüffiltration 8.77 $cm^2$. Gemessen wird die Filtratmenge, die während der Filtrationszeit von 0 bis 20 Minuten ($p_1$) und in der Filtrationszeit 20 bis 60 Minuten ($p_2$) anfällt. Die Verstopfungskonstante berechnet sich dann nach der Formel

$$K_w = 100.000 \; \frac{\left(2 - \dfrac{P_2}{P_1}\right)}{P_2 + P_1}$$

Der Filtrationseffekt bzw. die Qualität der filtrierten Viskose ist umso geringer, je höher die $K_w$-Werte ausfallen.

Überraschend konnte nun gefunden werden, daß hochmolekulare Xanthogenate im Gegensatz zu den bei der Klärung von wässrigen Lösungen eingesetzten Substanzen bereits in wesentlich geringeren Konzentrationen eine unerwartet große Wirkung zeigen. Bei Einsatz dieser Mittel ist es möglich, die benötigte Menge um etwa 2 Zehnerpotenzen bei gleicher Wirkung herabzusetzen. Wie in den nachfolgenden Beispielen noch im einzelnen gezeigt, ist es beispielsweise möglich, durch Zusatz von 0,001 %, bezogen auf den eingesetzten Zellstoff in der Viskose, eines Maisstärke-Xanthogenats eine deutlich bessere Qualität der filtrierten Viskose zu erhalten als bei Zusatz von 0,1 % einer Maisstärkelösung.

In gleicher Weise wie Maisstärke-Xanthogenate wirken auch Zusätze eines hochmolekularen Cellulosexanthogenats aus nicht vorgereiftem Linters - Zellstoff sowie andere hochmolekulare Zellulosexanthogenate von substituierten Cellulosederivaten wie z.B. Carboxymethylcellulose usw.

Es wird vermutet, daß die Wirkung dieser Substanzen auf der ähnlichen Konstitution wie die der $\alpha$-Cellulose bei der Viskoseherstellung zurückzuführen ist. Voraussetzung ist jedoch, daß es sich um hochmolekulare Stoffe handelt, die mit Schwefelkohlenstoff im alkalischen Bereich in der Lage sind, ein Xanthogenat zu bilden.

Zur weiteren Verdeutlichung der Erfindung sollen die nachfolgenden Beispiele dienen. Falls nicht anders angegeben, beziehen sich Prozent- und Teilangaben auf Gewichtsmengen.

Beispiel 1 (Vergleich):

Ein handelsüblicher Buchen-sulfitzellstoff mit einem $\alpha$-Cellulosegehalt von 90,5 % und einem Durchschnittspolymerisationsgrad (DP) von 810 wurde in einer Tauchpresse der Firma Blaschke, Endersbach unter Verwendung einer hemizellulosefreien Natronlaugelösung alkalisiert. Die Laugenkonzentration betrug 230 g/l NaOH. Nach dem Abpressen wurde eine Alkalizellulose erhalten, die 32 % Cellulose und 16,5 % NaOH enthielt. Nach kurzer Zerfaserung erfolgte die Vorreife bei 54°C während einer Zeit von 9 Stunden. Durch diese Vorreife wurde der DP-Wert der Cellulosemoleküle auf 290 abgesenkt. Die anschließende Sulfidierung erfolgte in einem evakuierten Metallbehältnis bei einer Zugabe von Schwefelkohlenstoff von 35 %, bezogen auf den Cellulosegehalt. Bei der Sulfidierung wurde eine Reaktionszeit von 90 Minuten bei 30°C eingehalten.

Das gebildete Natriumcellulosexanthogenat wurde anschließend durch Zugabe von 10%iger wässriger Natronlauge und Wasser mit Hilfe eines Flügelrührers gelöst. Die Rührzeit betrug 2 Std. 30 Min. Die Viskose hatte dann eine Zusammensetzung von 9,0 % Cellulose und 5,8 % NaOH. Der DP-Wert der Cellulose in der Viskose betrug 290. Die Viskosität betrug 49 Kugelfallsekunden.

Mittels einer Zahnradpumpe wurde diese Viskose durch eine Metallfritte gedrückt, die einen Porendurchmesser von 20 µm aufwies. Eine solche Porengröße entspricht betrieblich eingesetzten Filtermaterialien, eine solche Feinheit ist auch erforderlich, da die Spinndüsen-öffnungen üblicherweise ein Bohrungsdurchmesser von 60 bis 120 µm aufweisen, eine Filtration also bereits Verunreinigungen mit wesentlich kleinerem Durchmesser abtrennen muß. Der Durchsatz an Viskose betrug bei dieser

Filtration 1cm$^3$ Viskose pro cm$^2$ Filterfläche und Minute. Die Qualität des erhaltenen Filtrats wurde durch Bestimmung der Filterverstopfungskonstante nach der oben angegebenen Methode beurteilt. Es wurde ein $K_W$-Wert von 136 gemessen. Wiederholungen dieses Versuches ergaben $K_W$-Werte zwischen 125 und 136.

Beispiel 2

Die Viskoseherstellung gemäß Beispiel 1 wurde wiederholt, in die 10%ige Löselauge wurde jedoch eine Xanthogenatlösung gegeben, die aus einem nicht vorgereiften Linterszellstoff mit einem DP von 2100 gefertigt war. Die Zusammensetzung dieses hochmolekularen Xanthogenates waren 4,5 % Cellulose, 10 % NaOH und 50 % Schwefelkohlenstoff, bezogen auf eingesetzte Linters. Es wurde nur soviel des hochmolekularen Xanthogenates zur Löselauge gegeben, daß die Menge 0,001 % bezogen auf den eingesetzten niedrigmolekularen Zellstoff, betrug. Eine nach der Filtration durch die Filterfritte durchgeführte Prüfung der Filterverstopfungszahl ergab einen $K_W$-Wert von 32 (Mittel aus 5 Bestimmungen).

Es ist erforderlich, das eingesetzte Linters -Cellulosexanthogenat getrennt von der Hauptmenge des niedermolekularen Xanthogenats herzustellen. Wichtig ist, daß es sich bei dem Linters -Xanthogenat um ein hochmolekulares Xanthogenat handelt, das möglichst keiner Vorreife unterworfen worden ist. Um eine einwandfreie Löslichkeit des Linters -Xanthogenates zu gewährleisten, ist die Einhaltung eines höheren Alkaliverhältnisses und der Einsatz einer größeren Menge Schwefelkohlenstoff als bei der Hauptmenge erforderlich.

Beispiel 3 (Vergleich):

Es wurde wiederum eine Viskose gemäß Beispiel 1 hergestellt. In die Löselauge wurde eine 5%ige Maisstärkelösung mit einer solchen Menge gegeben, daß der Stärkegehalt der Viskose, bezogen auf eingesetzten Zellstoff 0,1 % betrug. Nach dem Prüfverfahren gemäß Beispiel 1 konnte im Mittel aus fünf Bestimmungen ein $K_w$-Wert von 62 festgestellt werden.

In einem zweiten Versuch wurde nur noch soviel Stärkelösung zugegeben, daß 0,01 % dieser Substanz bezogen auf den Cellulosegehalt der Viskose zugegen war. Unter diesen Bedingungen wurde ein $K_w$-Wert von 128 bestimmt (Mittel aus fünf Bestimmungen).

In einem dritten Versuch wurde die Menge der eingesetzten Stärkelösung weiter reduziert auf 0,001 % bezogen auf Cellulose in der Viskose. Als Mittelwert des $K_w$-Wertes der filtrierten Viskose wurde 136 bestimmt.

Beispiel 4

Es wurde wiederum eine Viskose gemäß Beispiel 1 hergestellt, der Löselauge jedoch ein Stärkexanthogenat der Zusammensetzung 4,5 % Stärke, 10 % NaOH und 50 % $CS_2$, bezogen auf eingesetzte Stärke, zur Löselauge gegeben. Die Konzentration des Stärkexanthogenats in der Viskose betrug 0,001 % auf eingesetzte Cellulose der Viskose. Im nachfolgenden Prüfverfahren gemäß Beispiel 1 konnte bei der filtrierten Viskose ein $K_w$-Wert von 29 ermittelt werden. Auch dieser Wert ist wieder als Mittelwert aus 5 Bestimmungen errechnet worden.

Die Herstellung des Stärkexanthogenats geschah in einfacher
Weise durch Zugabe von Natronlauge, Schwefelkohlenstoff
und Wasser unter Rühren zur Stärke gemäß Houben-Weyl,
Methoden der organischen Chemie, Band 14/II, Seite 908.

0074012

1. Verfahren zur Verbesserung der Filtrierbarkeit von Viskose, die zur Herstellung von geformten Gebilden aus Regeneratcellulose nach dem Viskoseverfahren geeignet ist, dadurch gekennzeichnet, daß der Viskose vor der ersten Filtration 0,1 Gew.-% oder weniger, bezogen auf den Cellulosegehalt der Viskose, eines hochmolekularen Alkali-polysaccharid-xanthogenats zugemischt werden.

2. Verfahren nach Anspruch 1, dadurch gekennzeichnet, daß das Alkali-polysaccharid-xanthogenat in einer Menge von 0,001 bis 0,1 Gew.-%, bezogen auf den Cellulosegehalt in der Viskose, zugemischt wird.

3. Verfahren nach Anspruch 1 oder 2, dadurch gekennzeichnet, daß das Alkali-polysaccharid-xanthogenat, vorzugsweise in gelöster Form, zusammen mit der Löselauge und/oder dem Wasser bei dem Löseprozeß des Alkalicellulosexanthogenats zur Bildung von Viskose zugesetzt wird.

4. Verfahren nach einem der vorhergehenden Ansprüche, dadurch gekennzeichnet, daß als hochmolekulares Alkali-polysaccharid-xanthogenat ein Alkalixanthogenat einer hochmolekularen Cellulose, eines hochmolekularen Esters oder Äthers der Cellulose oder einer Stärke eingesetzt wird.